(19) **Europäisches Patentamt / European Patent Office / Office européen des brevets**

(11) **EP 4 579 923 A1**

(12) **EUROPEAN PATENT APPLICATION**
published in accordance with Art. 153(4) EPC

(43) Date of publication:
**02.07.2025 Bulletin 2025/27**

(21) Application number: **24764176.4**

(22) Date of filing: **27.02.2024**

(51) International Patent Classification (IPC):
**H01M 50/446** (2021.01)    **H01M 50/449** (2021.01)
**H01M 50/411** (2021.01)    **H01M 50/431** (2021.01)
**H01M 10/052** (2010.01)    **H01M 10/04** (2006.01)
**H01M 50/103** (2021.01)    **H01M 10/0525** (2010.01)

(52) Cooperative Patent Classification (CPC):
**H01M 10/04; H01M 10/052; H01M 10/0525;**
**H01M 50/103; H01M 50/411; H01M 50/431;**
**H01M 50/446; H01M 50/449;** Y02E 60/10;
Y02P 70/50

(86) International application number:
**PCT/KR2024/002532**

(87) International publication number:
**WO 2024/181777 (06.09.2024 Gazette 2024/36)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 27.02.2023   KR 20230026319
19.09.2023   KR 20230125131

(71) Applicant: **LG Energy Solution, Ltd.**
**Seoul 07335 (KR)**

(72) Inventors:
• **BAE, Won-Sik**
  **Daejeon 34122 (KR)**
• **RYU, Bi-Oh**
  **Daejeon 34122 (KR)**
• **SUNG, Dong-Wook**
  **Daejeon 34122 (KR)**
• **LEE, So-Yeong**
  **Daejeon 34122 (KR)**

(74) Representative: **Hoffmann Eitle**
**Patent- und Rechtsanwälte PartmbB**
**Arabellastraße 30**
**81925 München (DE)**

(54) **SEPARATOR FOR LITHIUM SECONDARY BATTERY AND METHOD OF MAKING SAME**

(57)    A separator according to the present disclosure has an organic/inorganic composite porous coating layer on a surface of a polymer substrate, wherein the organic/inorganic composite porous coating layer includes a first region including a larger amount of inorganic particles and a second region including a smaller amount of inorganic particles so that heat resistance at the side of the battery is improved by the first region, thereby solving a short circuit problem caused by shrinkage at two ends of the separator.

FIG. 1

EP 4 579 923 A1

**Description**

TECHNICAL FIELD

The present disclosure relates to a separator for a lithium secondary battery and a method for manufacturing the same.

The present application claims priority to Korean Patent Application No. 2023-0026319 filed on February 27, 2023 and Korean Patent Application No. 2023-0125131 filed on September 19, 2023 in the Republic of Korea, the disclosures of which are incorporated herein by reference.

BACKGROUND

Due to being easily applicable to different types of products and having electrical properties such as high energy density, lithium secondary batteries are commonly applied to not only portable devices but also electric vehicles (EVs) or hybrid electric vehicles (HEVs) that are powered by a source of electric power.

Secondary batteries widely used at present have an operating voltage of a unit cell of about 2.5V to 4.5V. Accordingly, when higher output voltage is required, a plurality of battery cells may be connected in series to form a battery pack. Additionally, the battery pack may be formed by connecting the plurality of battery cells in parallel according to the charge/discharge capacity required for the battery pack. Accordingly, the number of battery cells included in the battery pack and the electrical connection type may be variously set depending on the required output voltage and/or charge/-discharge capacity.

Meanwhile, it is known that the type of unit cell of secondary batteries includes cylindrical, prismatic and pouch-type. In the case of cylindrical secondary battery cells, a battery is manufactured by winding a positive electrode and a negative electrode with a separator or an insulator interposed between them to form a jellyroll-type electrode assembly, and placing the electrode assembly in a battery can. Additionally, an uncoated portion of each of the positive electrode and the negative electrode may be connected to a strip-type electrode tab, and the electrode tab electrically connects the electrode assembly to an exposed electrode terminal. For reference, the positive electrode terminal is a cap plate of a sealing body that seals an open portion of the battery can, and the negative electrode terminal is the battery can. However, the conventional cylindrical battery cell having this structure has high resistance and low current collection efficiency and generates a large amount of heat because the electric current is concentrated on the strip-type electrode tab connected to the positive electrode uncoated portion and/or the negative electrode uncoated portion.

The resistance and heat generation issues are not critical to small cylindrical battery cells having 18650 or 21700 form factor, but with the increasing form factor to apply cylindrical battery cells to electric vehicles, a large amount of heat may be generated near the electrode tab during fast charging, and two end portions of the electrode assembly is pressed by the can over the repeated charge and discharge, causing partial deformation of the electrode assembly, resulting in tears in the separator and internal circuit shorts. The internal short circuits may cause fires in the cylindrical battery cells.

There have been attempts to introduce a porous coating layer including inorganic particles into the separator to reduce the thermal shrinkage property of a porous polymer substrate of the separator, but when the separator including the porous coating layer having the same composition over the entire surface is applied to a large-scale cylindrical battery, there may be still the limited heat resistance characteristics.

Additionally, circuit shorts between the electrodes occur in the event of thermal shrinkage of the separator, and due to the unique structure of jellyroll, when an electrolyte solution is injected, it results in non-uniform electrolyte wetting paths and low uniformity in electrolyte wetting, causing a resistance difference in the battery.

SUMMARY

Technical Problem

The present disclosure is directed to providing a separator with reduced thermal shrinkage property.

Specifically, the present disclosure is directed to providing a separator with improved heat resistance characteristics at two ends for use in large-scale cylindrical batteries, and an electrochemical device, in particular, a lithium secondary battery including the same.

Additionally, the present disclosure is directed to providing a separator having uniform electrolyte wetting for use in large-scale cylindrical batteries and an electrochemical device, in particular, a lithium secondary battery including the same.

Furthermore, the present disclosure is directed to providing a cylindrical battery cell including a separator with reduced thermal shrinkage property, a battery pack including the same and a vehicle including the battery pack.

The technical problems to be solved by the present disclosure are not limited to the above-described problems, and these and other problems will be clearly understood by those skilled in the art from the following description.

Technical Solution

To solve the above-described problem, a first aspect of the present disclosure provides a separator for an electrochemical device according to the following embodiment.

The separator for the electrochemical device according to a first embodiment includes a porous polymer substrate; and a porous coating layer on at least one surface of the porous polymer substrate, wherein the porous coating layer includes a first region at two ends on outermost sides of the separator in a width direction and a second region between the first regions, and

wherein each of the first region and the second region independently includes inorganic particles and a binder material, and a content ratio of the inorganic particles in the first region according to the following Equation 1 is higher than a content ratio of the inorganic particles in the second region according to the following Equation 2:

content ratio of the inorganic particles in the first region (wt%) = [an amount of the inorganic particles in the first region/(an amount of the inorganic particles in the first region + an amount of the binder material in the first region)] $\times$ 100,                [Equation 1]

content ratio of the inorganic particles in the second region (wt%) = [an amount of the inorganic particles in the second region/(an amount of the inorganic particles in the second region + an amount of the binder material in the second region)] $\times$ 100.                [Equation 2]

According to a second embodiment, in the first embodiment, the porous coating layer may have a higher porosity of the first region than a porosity of the second region.

According to a third embodiment, in the first or second embodiment, the content ratio of the inorganic particles in the second region may be lower than the first region and the content ratio of the inorganic particles in the second region may be 96 wt% or less.

According to a fourth embodiment, in any one of the first to third embodiments, the content ratio of the inorganic particles in the first region may be higher than the second region and the content ratio of the inorganic particles in the first region may be 70 wt% or more and 98 wt% or less.

According to a fifth embodiment, in any one of the first to fourth embodiments, a width of one first region may be from 5% to 35% of a total length of the porous coating layer in the width direction.

According to another embodiment of the present disclosure, there is provided a method for manufacturing a separator of the following embodiments.

The method for manufacturing the separator according to a sixth embodiment is a method for manufacturing the separator according to any one of the first to fifth embodiments, and the method is performed by a roll-to-roll process in which a long strip-shaped porous polymer substrate is continuously supplied, and includes the step of obtaining a separator strip including a composite porous coating layer having a first region and a second region on at least one surface of the porous polymer substrate, wherein the first region having a predetermined width is present at two ends in a transverse direction (TD) perpendicular to a machine direction (MD) along which the porous polymer substrate travels and a second region is present between the first regions.

According to a seventh embodiment, in the sixth embodiment, the first region and the second region may be formed by applying a slurry for forming the first region and a slurry for forming the second region to each preset area using a double slot die, respectively.

According to an eighth embodiment, in the sixth or seventh embodiment, the separator strip may be cut into a predetermined length to obtain the separator, and the obtained separator may have the second region whose side is exposed through the two ends of the porous polymer substrate in the MD direction.

According to still another embodiment of the present disclosure, there are provided an electrode assembly and a cylindrical battery cell.

The electrode assembly according to a ninth embodiment is a j ellyroll-type electrode assembly including a first electrode plate having a sheet shape and a second electrode plate having a sheet shape wound in a direction with a separator interposed between the first electrode plate and the second electrode plate, wherein the separator is the separator according to any one of the first to fifth embodiments.

The cylindrical battery cell according to a tenth embodiment includes a jellyroll-type electrode assembly including a positive electrode plate and a negative electrode plate wound in a direction with a separator interposed between the positive electrode plate and the negative electrode plate; a battery can accommodating the electrode assembly; and a sealing body to seal an open end portion of the battery can, wherein the separator is the separator according to any one of the first to fifth embodiments.

According to an eleventh embodiment, in the tenth embodiment, the cylindrical battery cell may have a ratio of form factor of 0.4 or more.

According to a twelfth embodiment, in the tenth or eleventh embodiment, the cylindrical battery cell may be a 46110 cell, a 48750 cell, a 48110 cell, a 48800 cell, a 46800 cell or a 46950 cell.

Advantageous Effects

The separator according to an aspect of the present disclosure has the porous coating layer on at least one surface of the porous polymer substrate, and the porous coating layer includes the first region including a large amount of inorganic particles at two ends to improve the heat resistance at the two ends of the separator.

Additionally, the first region including a large amount of inorganic particles is disposed at two ends and the second region including a small amount of inorganic particles is disposed between the first regions, in order to improve electrolyte wetting into the second region through the first region having high air permeability.

Therefore, according to another aspect of the present disclosure, it may be possible to provide the cylindrical battery cell having low internal resistance and no or little internal circuit short risk, and the battery pack and the vehicle including the same.

BRIEF DESCRIPTION OF THE DRAWINGS

FIG. 1 schematically shows a separator according to an aspect of the present disclosure.
FIG. 2 schematically shows a method for manufacturing a separator according to an aspect of the present disclosure.
FIG. 3 schematically shows a method for manufacturing a separator according to an aspect of the present disclosure.
FIG. 4 is a photographic image of a negative electrode surface taken from a battery of Example 1.
FIG. 5 is a photographic image of a negative electrode surface taken from a battery of Example 2.
FIG. 6 is a photographic image of a negative electrode surface taken from a battery of Comparative Example 1.

DETAILED DESCRIPTION

Hereinafter, the present disclosure will be described in detail.

It should be understood that "comprise" when used in the specification, specifies the presence of stated elements, and does not preclude the presence or addition of one or more other elements unless expressly stated otherwise.

Throughout the specification, A and/or B refers to either A or B or both.

An aspect of the present disclosure relates to a separator for an electrochemical device.

The electrochemical device is a device that converts chemical energy to electrical energy by electrochemical reaction, and is the concept including primary batteries and secondary batteries. Additionally, the secondary batteries can be charged and discharged, and is the concept including lithium ion batteries, nickel-cadmium batteries, nickel-hydrogen batteries and the like.

In the present disclosure, the separator acts as a porous ion-conducting barrier that allows ions to pass through while preventing electrical contact between negative and positive electrodes in the electrochemical device. The separator has a plurality of pores therein, and preferably, the pores are connected to each other to allow gases and/or liquids to pass from a side of the separator to the opposite side.

The separator 100 according to an aspect of the present disclosure includes a porous polymer substrate 110 having a plurality of pores, and the polymer substrate 110 includes a polymer material. Additionally, the separator includes a porous coating layer 120 on at least one surface of the polymer substrate 110.

The porous coating layer may include inorganic particles and a binder material, and the inorganic particles may be bonded by the binder material into a layered structure. The coating layer has a porous structure resulting from spaces (interstitial volume) between the inorganic particles. The separator's capacity to hold the electrolyte solution may be improved by the porous structure.

In an embodiment of the present disclosure, the porous coating layer may be 3 vol% to 40 vol% based on the total volume 100 vol% of the separator, and along with this or independently of this, the thickness of the coating layer may be 5% to 50% based on the total thickness 100% of the separator.

In an embodiment of the present disclosure, the porous polymer substrate is a sheet type porous membrane including the polymer material and having the plurality of pores. For example, the polymer substrate may include one or more sheets of at least one selected from a porous polymer film and a nonwoven fabric. The pores include open pores, and the open pores are connected to each other to allow gases and/or liquids to pass from a side of the polymer substrate to its opposite side.

In an embodiment of the present disclosure, the polymer substrate may have air permeability of 2,000 sec/100cc or less and porosity of from 30 vol% to 60 vol% in terms of output and cycling characteristics of the battery. Meanwhile, in the present disclosure, the polymer substrate may have a pore diameter $D_{50}$ in a range between 10 nm and 100 nm.

In the present disclosure, the air permeability refers to the time (sec) required for 100 ml of air to pass through the polymer substrate or the separator of 1 square inch in size under the constant air pressure of 4.8 inches. The air permeability may be, for example, measured using Asahi seiko EG01-55-1MR.

In the present disclosure, the porosity refers to a ratio of volume occupied by pores to the total volume, is indicated in vol%, and may be used interchangeably with void fraction, void ratio or the like. In the present disclosure, the measurement of the porosity is not limited to a particular method, and according to an embodiment of the present disclosure, the porosity may be, for example, measured by the Brunauer-Emmett-Teller (BET) method using nitrogen gas or Hg porosimeter. Alternatively, in an embodiment of the present disclosure, the porosity of an object may be calculated from a difference between apparent density and net density of the object, wherein the net density is calculated from the composition ratio of the constituent elements of the object and the density of each constituent element.

Meanwhile, in an embodiment of the present disclosure, the porosity may increase with the increasing amount of inorganic particles, and accordingly the porosity of a first region may be higher than the porosity of a second region. Meanwhile, the porosity may be, for example, measured through air permeability, and accordingly the air permeation time (sec/100cc) of the first region may be shorter than that of the second region.

In an embodiment of the present disclosure, the porous polymer substrate may be 5 um to 20 um in thickness to reduce the thickness of the electrochemical device and increase the energy density. When the thickness of the polymer substrate is below the aforementioned numerical range, the function of the conducting barrier is insufficient, and when the thickness of the polymer substrate is too much beyond the aforementioned range (that is to say, the polymer substrate is too thick), the resistance of the separator may increase so much.

In an embodiment of the present disclosure, the polymer material may preferably include a thermoplastic resin having the melting point of 200°C or less to provide a shut-down function. The polymer material may include at least one of polyolefin-based resins. The shut-down function refers to a function of polymer resin that melts in the event of a temperature rise of the battery, to clog the pores of the polymer substrate to block the ion movement between the positive electrode and the negative electrode, thereby preventing thermal runaway of the battery.

The polyolefin-based resin may include, for example, at least one selected from the group consisting of polyethylene, polypropylene, polybutene and polypentene. In particular, the polyolefin-based resin may be polyethylene and/or polypropylene. Additionally, along with the polyolefin-based resin, the polymer material may further include at least one selected from polymer resins such as polyethyleneterephthalate, polybutyleneterephthalate, polyacetal, polyamide, polycarbonate, polyimide, polyetheretherketone, polyethersulfone, polyphenylene oxide, polyphenylene sulfide and polyethylenenaphthalene.

Subsequently, the inorganic particles and the binder material included in the porous coating layer of the separator will be described.

In an embodiment of the present disclosure, the inorganic particles are not limited to a particular type and may include those having a particle size that is smaller than the desired thickness of the coating layer, for example, 1/2 to 1/1,000 of the thickness of the coating layer, and possessing electrochemical stability. For example, the diameter of the inorganic particles may be 10 nm or more. Meanwhile, for example, the average diameter $D_{50}$ of the inorganic particles may be 10 um or less, 7 um or less, 5 um or less, 2 um or less, or 1 um or less. That is, the inorganic particles are not limited to a particular type and may include those in which oxidation and/or reduction reaction does not occur in the operating voltage range (for example, 0 to 5 V vs Li/Li$^+$) of the electrochemical device applied. In particular, the use of inorganic particles having the ability to transport ions may increase ionic conductivity in the electrochemical device, contributing to the improved performance. Additionally, the use of high dielectric constant inorganic particles as the inorganic particles may contribute to the increased degree of dissociation of an electrolyte salt, for example, a lithium salt in a liquid electrolyte, thereby improving the ionic conductivity of the electrolyte solution.

For the above-described reasons, in a specific embodiment of the present disclosure, the inorganic particles may include high dielectric constant inorganic particles having the dielectric constant of 5 or more or 10 or more, inorganic particles having the ability to transport lithium ions or a mixture thereof. Non-limiting examples of the inorganic particles having the dielectric constant of 5 or more may include $BaTiO_3$, $Pb(Zr,Ti)O_3$ (PZT), $Pb_{1-x}La_xZr_{1-y}Ti_yO_3$ (PLZT, where $0 < x < 1$, $0 < y < 1$), $Pb(Mg_{1/3}Nb_{2/3})O_3$-$PbTiO_3$ (PMN-PT), hafnia ($HfO_2$), $SrTiO_3$, $SnO_2$, $CeO_2$, $MgO$, $NiO$, $CaO$, $ZnO$, $ZrO_2$, $Y_2O_3$, $Al_2O_3$, $SiC$ or $TiO_2$, used singly or in combination. In particular, the inorganic particles such as $BaTiO_3$, $Pb(Zr,Ti)O_3$ (PZT), $Pb_{1-x}La_xZr_{1-y}Ti_yO_3$ (PLZT, where $0 < x < 1$, $0 < y < 1$), $Pb(Mg_{1/3}Nb_{2/3})O_3$-$PbTiO_3$ (PMN-PT) or hafnia ($HfO_2$) may exhibit high dielectric constant characteristics having the dielectric constant of 100 or more, and have piezoelectricity where a potential difference occurs between two surfaces due to electric charges generated when stretched or compressed by the application of a predetermined pressure, thereby preventing internal short circuits of the two electrodes in the event of external impacts, which contributes to the improved safety of the electrochemical device. Additionally, when the high dielectric constant inorganic particles and the inorganic particles having the ability to transport lithium ions are used together, their synergistic effect may be magnified.

In a specific embodiment of the present disclosure, the inorganic particles having the ability to transport lithium ions refer to inorganic particles that contain lithium but do not store lithium and have the function to transport lithium ions, and since the inorganic particles having the ability to transport lithium ions can transport and move lithium ions due to a sort of defect present in the particle structure, it may be possible to improve the conduction of lithium ions in the battery, thereby contributing to the improved battery performance. Non-limiting examples of the inorganic particles having the ability to transport lithium ions may include lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$ based glass ($0 < x < 4$, $0 < y < 13$) such as $14Li_2O\text{-}9Al_2O_3\text{-}38TiO_2\text{-}39P_2O_5$, lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$) such as $Li_{3.25}Ge_{0.25}P_{0.75}S_4$, lithium nitride ($Li_xN_y$, $0 < x < 4$, $0 < y < 2$) such as $Li_3N$, $SiS_2$ based glass ($Li_xSi_yS_z$, $0 < x < 3$, $0 < y < 2$, $0 < z < 4$) such as $Li_3PO_4\text{-}Li_2S\text{-}SiS_2$ or $P_2S_5$ based glass ($Li_xP_yS_z$, $0 < x < 3$, $0 < y < 3$, $0 < z < 7$) such as $LiI\text{-}Li_2S\text{-}P_2S_5$ or a mixture thereof.

In an embodiment of the present disclosure, non-limiting examples of the binder material that may be used in the porous coating layer may include any one polymer resin selected from the group consisting of polyvinylidene fluoride-co-hexafluoropropylene, polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cyanoethylpullulan, cyanoethylpolyvinylalcohol, cyanoethylcellulose, cyanoethylsucrose, pullulan and carboxymethyl cellulose or a mixture thereof. However, the present disclosure is not limited thereto.

In the separator for the electrochemical device according to an embodiment of the present disclosure, the porous coating layer includes the first region and the second region. Specifically, the porous coating layer includes the first region at two ends on the outermost sides of the separator in the width direction and the second region between the first regions.

In an aspect of the present disclosure, the separator may have a rectangular shape. In this instance, in the specification, a long side of the separator may be referred to as a 'length direction', and a short side of the separator may be referred to as a 'width direction'. Additionally, when considering the process of manufacturing the separator, according to the process of manufacturing the separator, the long side of the separator may extend along a direction in which the separator travels and the short side may extend along a direction perpendicular to the travel direction. Accordingly, the length direction of the separator may be also known as a machine direction (MD), and the width direction of the separator may be also known as a transverse direction (TD) perpendicular to the machine direction. Meanwhile, the machine direction and the transverse direction of the separator may be identified as the long side and the short side of the separator, and may be also identified through the polymer orientation of the separator substrate.

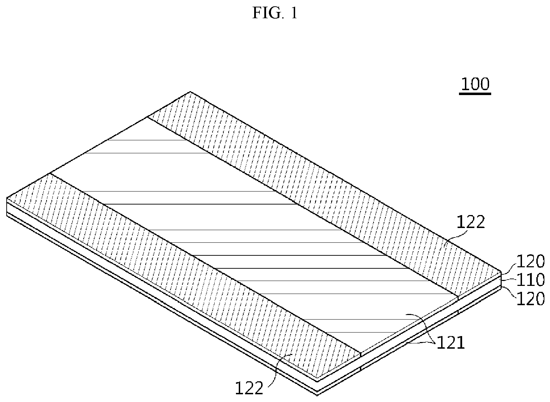

FIG. 1 shows the separator 100 according to an embodiment of the present disclosure.

Referring to FIG. 1, the separator according to an embodiment of the present disclosure has the porous coating layer 120 on each of at least one surface, for example, two surfaces of the porous polymer substrate 110, and the porous coating layer includes the first region 122 at the two ends of the outermost sides in the width direction and the second region 121 between the first regions.

In this instance, each of the first region and the second region independently includes the inorganic particles and the binder material, and a content ratio of the inorganic particles in the first region according to Equation 1 is higher than a content ratio of the inorganic particles in the second region according to Equation 2.

Content ratio of the inorganic particles in the first region (wt%) = [an amount of the inorganic particles in the first region/(an amount of the inorganic particles in the first region + an amount of the binder material in the first region)] $\times$ 100     [Equation 1]

Content ratio of the inorganic particles in the second region (wt%) = [an amount of the inorganic particles in the second region/(an amount of the inorganic particles in the second region + an amount of the binder material in the second region)] $\times$ 100     [Equation 2]

According to an embodiment of the present disclosure, because the porous coating layer includes the first region and the second region having different content ratios of inorganic particles, when the separator is provided to an electrode assembly, due to the higher porosity of the first region than the porosity of the second region, it may be possible to acceleration the electrolyte infiltration into the second region through the first region, thereby reducing the internal resistance of the battery. In addition, when the separator is used to manufacture a cylindrical battery cell, it may be possible to improve the heat resistance in the first region having a large amount of inorganic particles and suppress shrinkage of the separator at the two ends of the cylindrical battery cell, thereby preventing or suppressing internal circuit shorts in the battery.

In an embodiment of the present disclosure, the content ratio of the inorganic particles in the second region is smaller than the content ratio of the inorganic particles in the first region, and may be 96 wt% or less, 95 wt% or less, 90 wt% or less, 89 wt% or less, 85 wt% or less, 80 wt% or less, or 75 wt% or less. In an embodiment of the present disclosure, the content ratio of the inorganic particles in the first region is larger than the content ratio of the inorganic particles in the second region, and may be 60 wt% or more, 65 wt% or more, 70 wt% or more, 75 wt% or more, 80 wt% or more, 85 wt% or more, 88 wt% or more, 90 wt% or more, or 95 wt% or more. The content ratio of the inorganic particles in the second region may be, for example, from 60 wt% to 96 wt%, from 70 wt% to 85 wt% or from 94 wt% to 95 wt%.

In an embodiment of the present disclosure, the content ratio of the inorganic particles in the first region is larger than the content ratio of the inorganic particles in the second region, and may be, for example, from 70 wt% to 98 wt%, from 75 wt% to 95 wt%, from 77.5 wt% to 95 wt%, from 80 wt% to 95 wt%, from 80 wt% to 90 wt%, from 77.5 wt% to 80 wt%, or from 95 wt% to 98 wt%.

In an embodiment of the present disclosure, the width of the first region at the two ends of the separator in the transverse direction may be adjusted according to the shape of the electrode (the positive electrode and/or the negative electrode) in the electrode assembly. For example, the width of one first region may be from 0.1% to 40%, for example, from 5% to 35% or from 10% to 30% of the total length of the porous coating layer in the transverse direction. When the width of the first region lies in the aforementioned range, it may be possible to improve the heat resistance at the two ends of the separator and maintain the optimum weight of the separator, thereby improving the stability and energy density of the battery using the same, but the present disclosure is not limited thereto.

Subsequently, various embodiments of the porous coating layer will be described by way of example. However, the disclosed embodiments are provided to help understanding of the present disclosure and the scope of the present disclosure is not limited thereto.

In an embodiment of the present disclosure, the first region is disposed at part of the periphery of the second region such that at least part of the side of the second region is exposed to the outside. Additionally, the first region is disposed such that the boundaries adjoin the second region. In the separator according to the present disclosure, the first region may be disposed to improve the heat resistance at the two ends on the outermost sides of the separator, and the first region may be also disposed to accelerate the electrolyte infiltration into the coating layer.

Because the first region includes a small amount of the binder resin and a large amount of the inorganic particles, the first region has higher porosity than the second region and lower adhesion or bonding strength with the electrode than the second region, making it easier for the electrolyte solution to penetrate through the first region and reach the second region. Meanwhile, because the upper surface and the lower surface of the separator contact the electrode when manufacturing the battery, the electrolyte infiltration takes place through the side of the separator. Accordingly, in case where the entire periphery of the second region is surrounded by the first region, it may be possible to further improve electrolyte wetting into the second region through the first region having a large amount of inorganic particles. However, in the process of manufacturing the separator, the separator is manufactured in the shape of a long strip along the machine direction, and thus in order to make the process easy and reduce the total weight of the separator, the first region may be preferably formed at the two opposite sides of the second region.

In a specific embodiment of the present disclosure, the second region may be disposed in a rectangular shape on the inner side of the surface of the polymer substrate, and the first region may be disposed on each of any one side of the second region and the opposite side, and the first region may not be disposed on the other two sides. When the first region is disposed as described above, it may be possible to accelerate the direct electrolyte infiltration into the second region through the side of the second region in which the first region is not disposed, thereby reducing the internal resistance of the electrode assembly using the separator.

According to another aspect of the present disclosure, there is provided a method for manufacturing the separator.

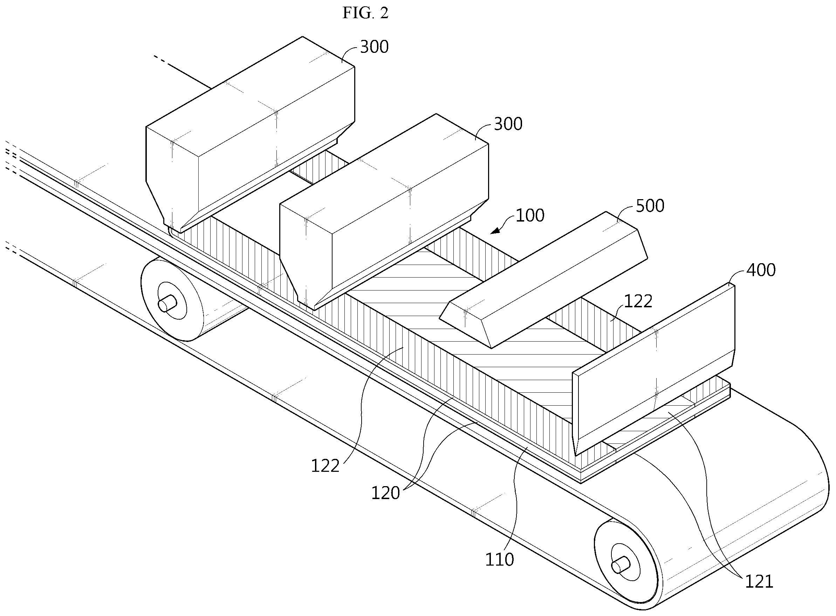

FIG. 2 is a schematic diagram showing the process of manufacturing the separator according to an embodiment of the present disclosure. The method for manufacturing the separator will be described with reference to FIG. 2.

Referring to FIG. 2, the separator may be manufactured by a roll-to-roll type continuous process. The long strip shaped polymer substrate 110 is continuously fed by rotating rolls of a roll-to-roll machine, and a slurry for forming the coating layer is applied to the surface of the polymer substrate. The slurry may be applied through a commonly used coater 300, for example, a slot die. Meanwhile, the slurry may be prepared for each of a slurry for forming the first region and a slurry for forming the second region, and each slurry may be prepared by adding the inorganic particles and the binder material to a suitable solvent.

When each slurry is prepared, the slurry for forming the first region is applied to the two ends in the transverse direction (TD direction) perpendicular to the direction (MD direction) in which the polymer substrate travels, and the slurry for forming the second region is applied between the first regions. The slurry for forming the first region and the slurry for forming the second region may be simultaneously applied using a double slot die. Alternatively, the slurries may be applied in a sequential order by applying one of the slurries for forming the first and second regions and then the other slurry. For example, the slurry for forming the first region may be applied to the two ends of the polymer substrate in the width direction and the slurry for forming the second region may be applied with a predetermined width inside of the area in which the slurry of the first region is continuously applied.

Subsequently, the slurries that have been applied may be dried to obtain the separator strip including the composite coating layer having the first region and the second region. The drying may be performed by heat or air while passing through a dryer 500. Subsequently, the separator strip is cut into a predetermined width, for example, using a cutter 400 to obtain the separator, and in this instance, in the obtained separator, the side of the second region is exposed through the two ends of the polymer substrate in the travel direction.

In an embodiment of the present disclosure, the porous coating layer may be formed on one surface of the porous polymer substrate and then the other surface in a sequential order. Alternatively, the porous coating layer may be formed on the two surfaces of the porous polymer substrate at the same time by another means. Subsequently, the separator obtained by slitting the separator strip to a desired length may be obtained in the shape of a long strip to be applied in a cylindrical battery cell, and accordingly the separator may be obtained such that the first region is disposed at the two ends on the outermost long sides of the porous coating layer, and the second region is disposed between the first regions.

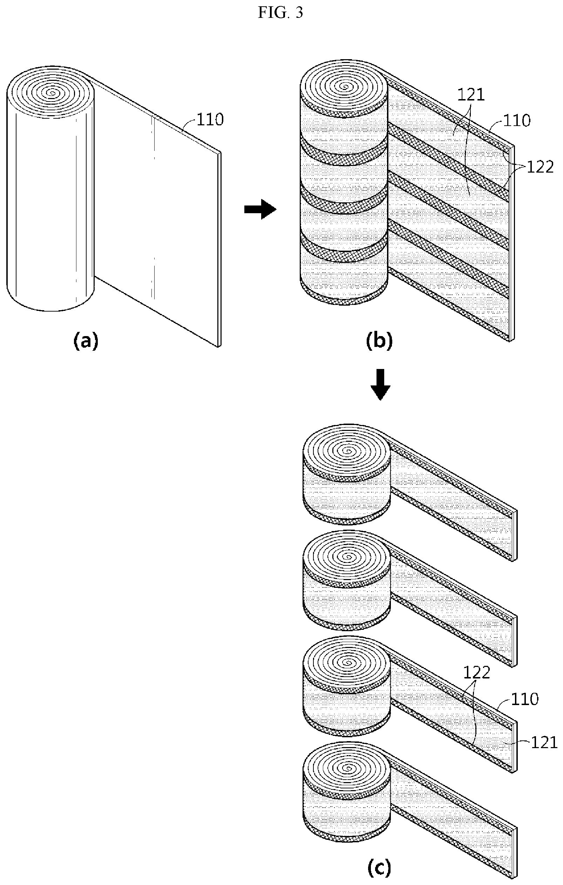

FIG. 3 is a schematic diagram showing the process of manufacturing the separator according to another embodiment of the present disclosure.

Referring to FIG. 3, the method for manufacturing the separator according to an embodiment of the present disclosure is as follows.

First, an unslitted long strip raw fabric of the porous polymer substrate 110 is prepared, and the slurry for forming the first region and the slurry for forming the second region including the inorganic particles and the binder material, each having different amounts of inorganic particles are prepared. Subsequently, one or two surfaces of the porous polymer substrate are coated such that the first region 122 is disposed at the two ends on the outermost sides in the transverse direction and the second region 121 and the first region 122 are arranged between them in an alternating manner and then dried to form the porous coating layer 120. Subsequently, slitting is performed to cut into the desired width required for assembling the battery cell to obtain the separator having the porous coating layer including the first region having a large amount of inorganic particles at the two ends on the outermost sides of the separator in the transverse direction and the second region having a small amount of inorganic particles between the first regions.

According to another aspect of the present disclosure, there is provided an electrochemical device including the above-described separator for the electrochemical device interposed between the positive electrode and the negative electrode. In an embodiment of the present disclosure, the electrochemical device may be a lithium ion secondary battery.

In a specific embodiment of the present disclosure, the electrochemical device may be manufactured by stacking the positive electrode and the negative electrode with the separator interposed between the positive electrode and the negative electrode in a sequential order to form an electrode assembly, and if necessary, injecting a nonaqueous electrolyte solution. In this instance, the positive electrode and the negative electrode of the electrode assembly and the nonaqueous electrolyte solution may include those commonly used to manufacture lithium secondary batteries.

In an embodiment of the present disclosure, the electrochemical device may be a cylindrical battery cell.

In an embodiment of the present disclosure, the cylindrical battery cell includes a jellyroll-type electrode assembly having a structure in which a positive electrode plate and a negative electrode plate are wound in a direction with a separator interposed between the positive electrode plate and the negative electrode plate; a battery can accommodating the electrode assembly; and a sealing body to seal an open end portion of the battery can, and the separator is the above-described separator.

In an embodiment of the present disclosure, the cylindrical battery cell may be a large-scale cylindrical battery cell having a ratio of form factor (defined as a value obtained by dividing the diameter of the cylindrical battery by its height, i.e., a ratio of diameter $\Phi$ to height H) of 0.4 or more.

In an embodiment of the present disclosure, the cylindrical battery cell may be, for example, 46110 cell (diameter 46 mm, height 110 mm, form factor ratio 0.418), 48750 cell (diameter 48 mm, height 75 mm, form factor ratio 0.640), 48110 cell (diameter 48 mm, height 110 mm, form factor ratio 0.418), 48800 cell (diameter 48 mm, height 80 mm, form factor ratio 0.600), 46800 cell (diameter 46 mm, height 80 mm, form factor ratio 0.575) or 46950 cell (diameter 46 mm, height 95 mm, form factor ratio 0.484). In the numbers indicating the form factor, the former two numbers indicate the diameter of the cell, the next two numbers indicate the height of the cell, and the last number 0 indicates that the cross section of the cell is circular.

In an embodiment of the present disclosure, the electrode assembly may be a jellyroll-type electrode assembly including a first electrode plate having a sheet shape and a second electrode plate having a sheet shape wound in a direction with a separator interposed between them. In this instance, the separator is the above-described separator.

Each of the first electrode plate and the second electrode plate may be a positive electrode or a negative electrode, and the electrode assembly will be described below.

In a specific embodiment of the present disclosure, the positive electrode may be manufactured by forming a positive electrode material layer on a positive electrode current collector. The positive electrode material layer may be formed by coating a positive electrode slurry including a positive electrode active material, a binder, a conductive material and a solvent on the positive electrode current collector, drying and rolling.

In a specific embodiment of the present disclosure, the positive electrode current collector may include, without limitation, any type of material having conductive properties without causing any chemical change in the corresponding battery, for example, stainless steel, aluminum, nickel, titanium, sintered carbon, or aluminum or stainless steel treated with carbon, nickel, titanium or silver on the surface.

In a specific embodiment of the present disclosure, the positive electrode active material may include compounds (lithiated intercalation compounds) capable of reversible intercalation and deintercalation of lithium.

In a specific embodiment of the present disclosure, the positive electrode active material may include, for example, lithium transition metal oxide; lithium metal iron phosphate; lithium nickel-manganese-cobalt oxide; oxide with partial substitution of other transition metal in lithium nickel-manganese-cobalt oxide; or two or more of them, but is not limited thereto. Specifically, the positive electrode active material may include, for example, layered compounds such as lithium cobalt oxide ($LiCoO_2$), lithium nickel oxide ($LiNiO_2$) or compounds substituted with one or more transition metals; lithium manganese oxide of formula $Li_{1+x}Mn_{2-x}O_4$ (where x is 0 to 0.33), $LiMnO_3$, $LiMn_2O_3$, $LiMnO_2$; lithium copper oxide ($Li_2CuO_2$); vanadium oxide such as $LiV_3O_8$, $LiV_3O_4$, $V_2O_5$, $Cu_2V_2O_7$; Ni site lithium nickel oxide represented by formula $LiNi_{1-x}M_xO_2$ (where M = Co, Mn, Al, Cu, Fe, Mg, B or Ga, x = 0.01 to 0.3); lithium manganese composite oxide represented by formula $LiMn_{2-x}M_xO_2$ (where M = Co, Ni, Fe, Cr, Zn or Ta, x = 0.01 to 0.1) or $Li_2Mn_3MO_8$ (where M = Fe, Co, Ni, Cu or Zn); lithium metal phosphate $LiMPO_4$ (where M = Fe, CO, Ni, or Mn); lithium nickel-manganese-cobalt oxide $Li_{1+x}(Ni_aCo_bMn_c)_{1-x}O_2$ (x = 0 to 0.03, a = 0.3 to 0.95, b = 0.01 to 0.35, c = 0.01 to 0.5, a+b+c=1); oxide $Li_a[Ni_bCo_cMn_dAl_e]_{1-f}M1_fO_2$ with partial substitution of aluminum in lithium nickel-manganese-cobalt oxide (M1 is at least one selected from the group consisting of Zr, B, W, Mg, Ce, Hf, Ta, La, Ti, Sr, Ba, F, P and S, $0.8 \leq a \leq 1.2$, $0.5 \leq b \leq 0.99$, $0 < c < 0.5$, $0 < d < 0.5$, $0.01 \leq e \leq 0.1$, $0 \leq f \leq 0.1$); oxide $Li_{1+x}(Ni_aCo_bMn_cM_a)_{1-x}O_2$ with partial substitution of other transition metal in lithium nickel-manganese-cobalt oxide (x = 0 to 0.03, a = 0.3 to 0.95, b = 0.01 to 0.35, c = 0.01 to 0.5, d = 0.001 to 0.03, a+b+c+d=1, M is any one selected from the group consisting of Fe, V, Cr, Ti, W, Ta, Mg and Mo), disulfide compounds; $Fe_2(MoO_4)_3$, but is not limited thereto.

In a specific embodiment of the present disclosure, optionally, the positive electrode may further include the conductive material. The conductive material may be porous. Accordingly, the conductive material may include, without limitation, any material having porous and conductive properties, and for example, may include a carbon-based material having porous properties. The carbon-based material may include carbon black, graphite, graphene, activated carbon, carbon fibers and carbon nanotubes (CNT). Additionally, the conductive material may include metallic conductive materials such as metal fibers, metal meshes; metallic powder such as copper, silver, nickel, aluminum; or organic conductive materials such as polyphenylene derivatives. These conductive materials may be used alone or in combination.

In a specific embodiment of the present disclosure, optionally, the positive electrode may further include the binder. The binder may include thermoplastic resin or thermosetting resin. More specifically, the binder may include polyethylene, polypropylene, polytetrafluoro ethylene (PTFE), polyvinylidene fluoride (PVDF), styrene-butadiene rubber, tetrafluoroethylene-perfluoroalkylvinyl ether copolymer, polyvinylidene fluoride-hexafluoropropylene copolymer, polyvinylidene fluoride-chlorotrifluoroethylene copolymer, ethylene-tetrafluoroethylene copolymer, polychlorotrifluoroethylene, polyvinylidene fluoride-pentafluoro propylene copolymer, propylene-tetrafluoroethylene copolymer, ethylene-chlorotrifluoroethylene copolymer, polyvinylidene fluoride-hexafluoropropylene-tetrafluoroethylene copolymer, polyvinylidene fluoride-perfluoromethylvinylether-tetrafluoro ethylene copolymer and ethylene-acrylic acid copolymer, used singly or in combination, but is not limited thereto, and may include any type of binder used in the corresponding technical field.

In a specific embodiment of the present disclosure, the positive electrode active material may be included in an amount of from 80 wt% to 99 wt% based on the total weight of solids in the positive electrode slurry.

In a specific embodiment of the present disclosure, the solvent used in the positive electrode slurry may include an organic solvent, for example, N-methyl-2-pyrrolidone (NMP), and when the positive electrode active material and optionally the binder and the conductive material are included, the solvent may be used in a sufficient amount for desirable viscosity. For example, the solvent may be included in such an amount that the concentration of solids in the slurry including the positive electrode active material, and optionally the binder and the conductive material is from 50 wt% to 95 wt%, and preferably from 70 wt% to 90 wt%.

In a specific embodiment of the present disclosure, the positive electrode may be manufactured by mixing the positive electrode active material and optionally the conductive material, and optionally the binder to prepare a composition for forming the positive electrode active material layer, applying the composition to at least one surface of the positive electrode current collector, drying and rolling. Another method for manufacturing the positive electrode may include casting the composition for forming the positive electrode active material layer on a support, peeling a film off from the support and laminating the film on the positive electrode current collector.

In a specific embodiment of the present disclosure, the negative electrode may be manufactured by forming a negative electrode material layer on a negative electrode current collector. The negative electrode material layer may be formed by coating a negative electrode slurry including a negative electrode active material, a binder, a conductive material and a solvent on the negative electrode current collector, drying and rolling.

In a specific embodiment of the present disclosure, the negative electrode active material may include lithium metal, carbon materials capable of reversible intercalation/deintercalation of lithium ions, metals or alloys of metals and lithium, metal composite oxide, materials capable of doping and dedoping lithium or transition metal oxide or a mixture thereof.

The carbon material capable of reversible intercalation/deintercalation of lithium ions as an example of the negative electrode active material may include, without limitation, any type of carbon-based negative electrode active material commonly used in lithium ion secondary batteries, and its typical example may include at least one of crystalline carbon or amorphous carbon. Examples of the crystalline carbon may include graphite such as amorphous, platy, flaky, spherical or fibrous natural graphite or artificial graphite, and examples of the amorphous carbon may include soft carbon (low temperature sintered carbon) or hard carbon, mesophase pitch carbide and sintered cokes.

The metal or alloy of the metal and lithium as an example of the negative electrode active material may include Cu, Ni, Na, K, Rb, Cs, Fr, Be, Mg, Ca, Sr, Si, Sb, Pb, In, Zn, Ba, Ra, Ge, Al, Sn or a mixture thereof, or alloys of these metals and lithium.

The metal composite oxide as an example of the negative electrode active material may include PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0{\leq}x{\leq}1$), $Li_xWO_2$ ($0{\leq}x{\leq}1$) or $Sn_xMe_{1-x}Me'_yO_z$ (Me: Mn, Fe, Pb, Ge; Me': Al, B, P, Si, Group 1, 2 and 3 elements in the periodic table, halogen; $0{<}x{\leq}1$; $1{\leq}y{\leq}3$; $1{\leq}z{\leq}8$), or a mixture thereof.

The material capable of doping and dedoping lithium as an example of the negative electrode active material may include Si, $SiO_x$ ($0{<}x{\leq}2$), Si-Y alloy (the Y is at least one of alkali metals, alkaline earth metals, Group 13 elements, Group 14 elements, transition metal or rare earth elements, a mixture thereof, but not Si), Sn, $SnO_2$, Sn-Y (the Y is at least one of alkali metals, alkaline earth metals, Group 13 elements, Group 14 elements, transition metal, rare earth elements, a mixture thereof, but not Sn), and at least one of them may be mixed with $SiO_2$. The Y may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, a mixture thereof.

The transition metal oxide as an example of the negative electrode active material may include lithium containing titanium composite oxide (LTO), vanadium oxide and lithium vanadium oxide.

In a specific embodiment of the present disclosure, the negative electrode active material may be included in an amount of from 80 wt% to 99 wt% based on the total weight of solids in the negative electrode slurry.

In a specific embodiment of the present disclosure, optionally, the negative electrode may further include the binder. The binder is the component that assists the bonding between the active material and the current collector, or among the active material, the conductive material and the current collector, and is usually added in an amount of from 1 to 30 wt% based on the total weight of solids in the negative electrode slurry. Examples of the binder may include polyvinylidenefluoride (PVDF), polyvinylalcohol, carboxymethylcellulose (CMC), starch, hydroxypropylcellulose, regenerated cellulose, polyvinylpyrrolidone, tetrafluoroethylene, polyethylene, polypropylene, ethylenepropylene-diene polymer (EPDM), sulfonated-EPDM, styrene-butadiene rubber, fluoro rubber and their copolymers.

In a specific embodiment of the present disclosure, optionally, the negative electrode may further include the conductive material. The conductive material is the component used to improve the conductivity of the negative electrode active material, and may be added in an amount of from 1 to 20 wt% based on the total weight of solids in the negative electrode slurry. The conductive material may be identical to or different from the conductive material used to manufacture the positive electrode, and may include, for example, carbon powder of carbon black, acetylene black (or Denka black), Ketjen black, channel black, furnace black, lamp black or thermal black; graphite powder having well-developed crystal structure such as natural graphite, artificial graphite or graphite; conductive fibers such as carbon fibers or metal fibers; metal powder such as fluoro carbon, aluminum and nickel powder; conductive whiskers such as zinc oxide, potassium titanate; conducting metal oxide such as titanium oxide; and conductive materials such as polyphenylene derivatives.

In a specific embodiment of the present disclosure, the solvent used in the negative electrode slurry may include water or an organic solvent, for example, NMP or alcohol, and when the negative electrode active material and optionally the binder and the conductive material are included, the solvent may be used in a sufficient amount for desirable viscosity. For example, the solvent may be included in such an amount that the concentration of solids in the slurry including the negative electrode active material, and optionally the binder and the conductive material is from 50 wt% to 95 wt%, and preferably from 70 wt% to 90 wt%.

In a specific embodiment of the present disclosure, when the nonaqueous electrolyte solution is used, the nonaqueous electrolyte solution may include a lithium salt and an organic solvent, and may further include an additive commonly used in the corresponding technical field.

In a specific embodiment of the present disclosure, the lithium salt has a cation and an anion, wherein the cation may include $Li^+$, and the anion may include $F^-$, $Cl^-$, $Br^-$, $I^-$, $NO_3^-$, $N(CN)_2^-$, $ClO_4^-$, $BF_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$,

$CH_3CO_2^-$, $SCN^-$, $(CF_3CF_2SO_2)_2N^-$ or a mixture thereof.

In a specific embodiment of the present disclosure, the exemplary lithium salts may be used alone or in combination as necessary. The lithium salt may be included in the nonaqueous electrolyte solution at the concentration of from 0.01M to 5M or from 0.1M to 5M or from 0.1M to 3M and the concentration may be appropriately changed within the commonly used range.

In a specific embodiment of the present disclosure, the organic solvent may include any type of organic solvent that may minimize the oxidation induced decomposition during charging and discharging of the secondary battery and exert the intended characteristics together with the additive. For example, the organic solvent may include an ether-based solvent, an ester-based solvent or an amide-based solvent, used singly or in combination.

In a specific embodiment of the present disclosure, among the exemplary organic solvents, the ether-based solvent may include dimethylether, diethylether, dipropyl ether, methyl ethyl ether, methylpropyl ether, ethylpropyl ether or a mixture thereof, but is not limited thereto.

In a specific embodiment of the present disclosure, the ester-based solvent may include a cyclic carbonate compound, a linear carbonate compound, a linear ester compound, a cyclic ester compound or a mixture thereof.

In a specific embodiment of the present disclosure, specific examples of the cyclic carbonate compound may include ethylene carbonate (EC), propylene carbonate (PC), 1,2-butylene carbonate, 2,3-butylene carbonate, 1,2-pentylenecarbonate, 2,3-pentylene carbonate, vinylene carbonate, fluoroethylene carbonate (FEC) or a mixture thereof.

In a specific embodiment of the present disclosure, specific examples of the linear carbonate compound may include dimethyl carbonate (DMC), diethyl carbonate (DEC), dipropyl carbonate, ethylmethyl carbonate (EMC), methylpropyl carbonate, ethylpropyl carbonate or a mixture thereof, but is not limited thereto.

In a specific embodiment of the present disclosure, specific examples of the linear ester compound may typically include methyl acetate, ethyl acetate, propyl acetate, methyl propionate, ethyl propionate, propyl propionate, butyl propionate or a mixture thereof, but is not limited thereto.

In a specific embodiment of the present disclosure, specific examples of the cyclic ester compound may include γ-butyrolactone, γ-valerolactone, γ-caprolactone, σ-valerolactone, ε-caprolactone or a mixture thereof, but is not limited thereto.

In a specific embodiment of the present disclosure, the cyclic carbonate-based compound is a high viscosity organic solvent and thus dissolves the lithium salt in the electrolyte well due to high dielectric constant. Accordingly, the cyclic carbonate-based compound may be mixed with the linear carbonate-based compound having low viscosity and low dielectric constant such as dimethyl carbonate and diethyl carbonate and the linear ester-based compound at an optimal ratio to prepare the nonaqueous electrolyte solution having high electrical conductivity.

The separator for the lithium secondary battery according to an aspect of the present disclosure may achieve effective transport of lithium ions, reduce side reaction at the interface between the separator for the lithium secondary battery including the ion-conducting polymer material and the electrode, and remarkably lower the increase in initial internal resistance of the battery. As a result, the battery using the same has improved output density characteristics and a decrease in irreversible capacity and its consequential improved rate characteristics, and thus it may be possible to reduce the time required to charge or discharge the battery, and improve the charge·discharge life. Accordingly, it may be used in the industrial field requiring fast charging, for example, mobile devices including mobile phones, laptop computers, digital cameras, camcorders or electric vehicle including hybrid electric vehicle (HEV), plug-in HEV (PHEV), and medium- and large-size energy storage systems.

In particular, the separator having the porous coating layer as described above may have the improved heat resistance at the two ends on the outermost sides and accordingly may be used in large-scale cylindrical battery cells.

Hereinafter, example, comparative example and experimental example are presented to help understanding of the present disclosure. However, the following experimental example is an experimental example about the configuration and effect of the present disclosure, and the scope of protection and effect of the present disclosure are not limited thereto.

**[Manufacture of separator]**

**Example 1**

PVDF-HFP (molecular weight (Mw) 500,000 g/mol, HFP content 15 wt%) and alumina (particle size 0.5 um) were added to acetone at a weight ratio of 22.5:77.5 to prepare a first region forming slurry containing 20 wt% solids.

Subsequently, PVDF-HFP (molecular weight (Mw) 500,000 g/mol, HFP content 15 wt%) and alumina (particle size 0.5 um) were added to acetone at a weight ratio of 25:75 to prepare a second region forming slurry containing 20 wt% solids.

A polymer film made of polyethylene (thickness 9 um, porosity 45 vol%, air permeation time 60 sec/100 cc) was prepared, and the first region forming slurry and the second region forming slurry were applied in a sequential order in the shape shown in FIG. 1 and dried at 23°C in the humidity condition of relative humidity of 45% to obtain a separator. The total width of the separator was 200 mm, and the width of the first region on each of two sides was 60 mm.

### Example 2

PVDF-HFP (molecular weight (Mw) 500,000 g/mol, HFP content 15 wt%) and alumina (particle size 0.5 um) were added to acetone at a weight ratio of 20:80 to prepare a first region forming slurry containing 20 wt% solids.

Subsequently, PVDF-HFP (molecular weight (Mw) 500,000 g/mol, HFP content 15 wt%) and alumina (particle size 0.5 um) were added to acetone at a weight ratio of 25:75 to prepare a second region forming slurry containing 20 wt% solids.

A polymer film made of polyethylene (thickness 9 um, porosity 45 vol%, air permeation time 60 sec/100cc) was prepared and the first region forming slurry and the second region forming slurry were applied in a sequential order in the shape shown in FIG. 1 and dried at 23°C in the humidity condition of relative humidity of 45% to obtain a separator. The total width of the separator was 200 mm, and the width of the first region on each of two sides was 60 mm.

### Example 3

PVDF-HFP (molecular weight (Mw) 500,000 g/mol, HFP content 15 wt%) and alumina (particle size 0.5 um) were added to acetone at a weight ratio of 5:95 to prepare a first region forming slurry containing 20 wt% solids.

Subsequently, PVDF-HFP (molecular weight (Mw) 500,000 g/mol, HFP content 15 wt%) and alumina (particle size 0.5 um) were added to acetone at a weight ratio of 25:75 to prepare a second region forming slurry containing 20 wt% solids.

A polymer film made of polyethylene (thickness 9 um, porosity 45 vol%, air permeation time 60 sec/100cc) was prepared, and the first region forming slurry and the second region forming slurry were applied in a sequential order in the shape shown in FIG. 1 and dried at 23°C in the humidity condition of relative humidity of 45% to obtain a separator. The total width of the separator was 200 mm, and the width of the first region on each of two sides was 60 mm.

### Comparative Example 1

PVDF-HFP (molecular weight (Mw) 500,000 g/mol, HFP content 15 wt%) and alumina (particle size 0.5 um) were added to acetone at a weight ratio of 25:75 to prepare a coating layer forming slurry containing 20 wt% solids.

A polymer film made of polyethylene (thickness 9 um, porosity 45 vol%, air permeation time 60 sec/100 cc) was prepared, and the slurry was applied and dried at 23°C in the humidity condition of relative humidity of 45% to obtain a separator. The total width of the separator was 200 mm.

### Comparative Example 2

PVDF-HFP (molecular weight (Mw) 500,000 g/mol, HFP content 15 wt%) and alumina (particle size 0.5 um) were added to acetone at a weight ratio of 25:75 to prepare a first region forming slurry containing 20 wt% solids.

Subsequently, PVDF-HFP (molecular weight (Mw) 500,000 g/mol, HFP content 15 wt%) and alumina (particle size 0.5 um) were added to acetone at a weight ratio of 5:95 to prepare a second region forming slurry containing 20 wt% solids.

A polymer film made of polyethylene (thickness 9 um, porosity 45 vol%, air permeation time 60 sec/100cc) was prepared and the first region forming slurry and the second region forming slurry were applied in a sequential order in the shape shown in FIG. 1 and dried at 23°C in the humidity condition of relative humidity of 45% to obtain a separator. The total width of the separator was 200 mm, and the width of the first region on each of two sides was 60 mm.

### [Evaluation of properties of separator]

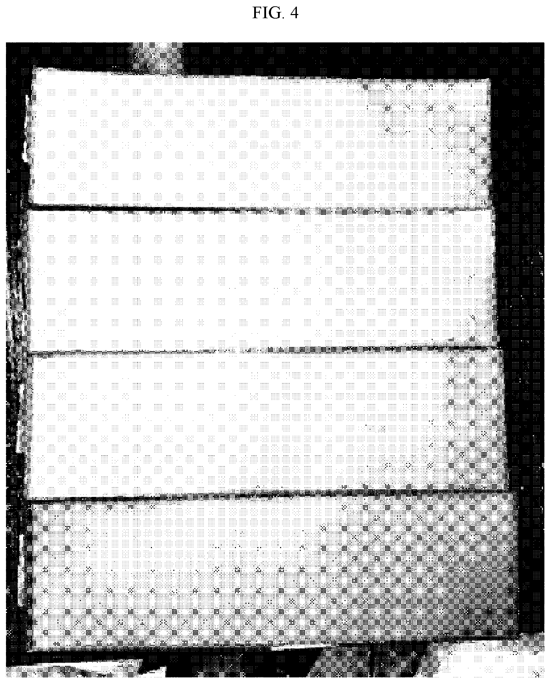

The properties of the separator are evaluated by the evaluation method as described below, and the results are shown in TABLEs 1 and 2 and FIGs. 4 to 6 below.

### Evaluation method

Heat resistance

The separator was prepared with a length of 200 mm and a width of 200 mm, marked with dots at an interval of 20 mm in the horizontal and vertical directions and then left in a 130°C oven for 30 minutes, and changes in interval between dots were observed.

The changes in interval between dots in the first region and the second region were measured in each of the length direction and the width direction, and shrinkage of the separator was measured according to the following equation.

In the following equation, the 'interval between dots' was measured using a ruler after the sample was left in the oven, the measurement was made for each of the first region and the second region, and shrinkage was calculated by averaging the measured values in each region.

$$\text{Shrinkage (\%)} = [(20\ mm - \text{interval between dots (mm)})/20\ mm]\ X\ 100$$

Air permeation time

The air permeability of the separator was measured using an air permeability measuring instrument (Asahi Seiko, EGO-IT) in accordance with JIS P8117. Meanwhile, to measure the air permeability of each of the first region and the second region, after the separator was prepared, the separator was divided into the first region and the second region using a knife to obtain a sample for air permeability measurement.

Electrode adhesion strength

An active material [natural graphite and artificial graphite (weight ratio 5:5)], a conductive material [super P] and a binder [polyvinylidene fluoride (PVdF)] were mixed at a weight ratio of 92:2:6 and dispersed in water, and then coated with a width of 250 mm on a copper foil to manufacture a negative electrode.

The separator manufactured in each of Examples 1 to 3 and Comparative Examples 1 and Comparative Example 2 was prepared.

The prepared separator was divided into a first region and a second region using a knife.

The prepared separator and the negative electrode were stacked and inserted in between 100 um thick PET films and then adhered using a roll lamination machine. In this instance, the conditions of the roll lamination machine were 60°C, the pressure of 2.4 kgf/mm and the rate of 5 m/min.

The separator and the negative electrode adhered to each other were tailored into a width of 25 mm and a length of 70 mm, the end of the separator and the negative electrode was mounted on UTM machine (Instron), a force was applied at 180° at the measurement rate of 300 mm/min to separate the separator from the negative electrode, and a force required to peel was measured.

As can be seen from the TABLE 2 below, it was confirmed that when each of the separators of Example 3 and Comparative Example 2 was used, due to low adhesion strength in the second region or the first region, electrodes were poorly assembled that it was unsuitable for evaluating electrolyte wetting, and the electrolyte wetting evaluation results were omitted.

Evaluation of electrolyte wetting

(1) Manufacture of negative electrode

Artificial graphite as a negative electrode active material, carbon black as a conductive material, carboxymethylcellulose (CMC) as a dispersant, and styrene-butadiene rubber (SBR, Zeon BM-L301) as a binder were mixed with water at a weight ratio of 95.8:1:1.2:2 to prepare a negative electrode slurry. The negative electrode slurry was coated with a thickness of 50 um on a copper foil (Cu-foil) to form a thin electrode plate, and the electrode plate was dried at 135°C for 3 hours or more and rolled (pressed) to manufacture a negative electrode.

(2) Manufacture of positive electrode

LiCoO2 as a positive electrode active material, carbon black as a conductive material and polyvinylidene fluoride (PVDF) as a binder were mixed with N-methyl-2-pyrrolidone (NMP) at a weight ratio of 98:1:1 to prepare a positive electrode slurry. The positive electrode slurry was coated with a thickness of 20 um on an aluminum foil to form a thin electrode plate, and the electrode plate was dried at 135°C for 3 hours or more and rolled (pressed) to manufacture a positive electrode.

(3) Manufacture of lithium secondary battery

Subsequently, the negative electrode and the positive electrode were stacked with the separator interposed between them to prepare a stack type electrode assembly, the electrode assembly was placed in a pouch case, and an electrolyte solution in which 1M $LiPF_6$ is dissolved in a mixed solvent of ethylene carbonate (EC) and diethyl carbonate (DEC) at a volume ratio of 30:70 was injected to manufacture a lithium secondary battery.

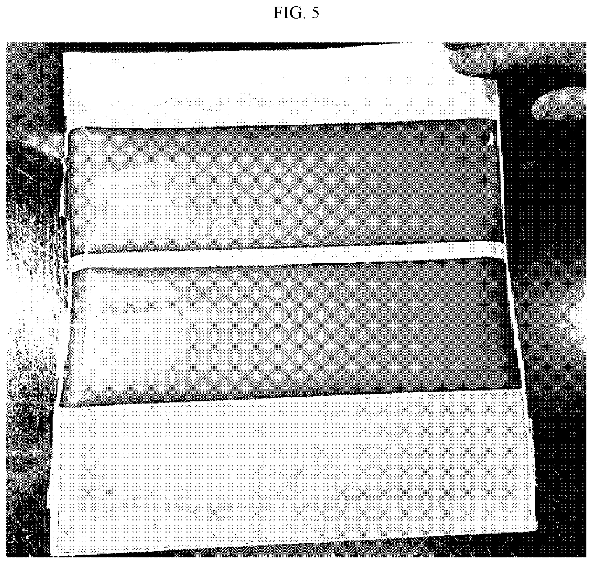

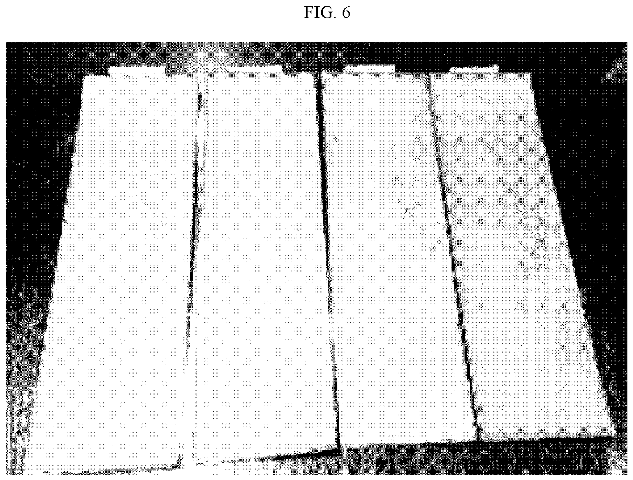

After disassembling the as-prepared secondary battery at SOC 60, wetting was observed through negative electrode surface observation. When wetting is good, uniform state of charge is observed over the entire surface of the negative electrode (FIGS. 4 and 5), but when wetting is bad, unfilled dark portions on the negative electrode surface (FIG. 6) are observed.

**Evaluation results**

[TABLE 1]

| Shrinkage (%) | First region | | Second region | |
|---|---|---|---|---|
| | Length direction | Width direction | Length direction | Width direction |
| Example 1 | 2 | 2 | 5 | 5 |
| Example 2 | 1.5 | 1.5 | 5 | 5 |
| Example 3 | 0.5 | 0.5 | 5 | 5 |
| Comparative Example 1 | - | - | 5 | 5 |
| Comparative Example 2 | 5 | 5 | 0.5 | 0.5 |

[TABLE 2]

| | Thickness (um) | Air permeability (sec/100cc) | | Electrode adhesion strength (gf/25mm) | | Wetting evaluation |
|---|---|---|---|---|---|---|
| | | First region | Second region | First region | Second region | wetting at the center of monocell |
| Example 1 | 17.3 | 167 | 189 | 110 | 130 | good (FIG. 4) |
| Example 2 | 17.5 | 132 | 190 | 96 | 135 | good (FIG. 5) |
| Example 3 | 17.5 | 101 | 190 | 3 | 140 | - |
| Comparative Example 1 | 17.3 | 191 | 189 | 142 | 138 | poor (FIG. 6) |
| Comparative Example 2 | 17.5 | 191 | 99 | 135 | 2 | - |

As can be seen through the above results, it was confirmed that when the first region having a large amount of inorganic particles was present on the two sides of the separator, heat resistance at the side of the separator was improved.

Accordingly, when the separator is applied to a jellyroll-type electrode assembly and used in a cylindrical battery, it was expected to solve the internal circuit short problem caused by shrinkage at the two ends of the separator.

While the present disclosure has been hereinabove described with regard to a limited number of embodiments and drawings, the present disclosure is not limited thereto, and it is apparent that a variety of changes and modifications may be made by those skilled in the art within the technical aspect of the present disclosure and the scope of the appended claims and their equivalents.

[Description of Reference Numerals]

100 - Separator
110 - Porous polymer substrate
120 - Porous coating layer
121 - Second region, 122 - First region
300 - Coater

400 - Cutter
500 - Dryer

**Claims**

1. A separator for an electrochemical device comprising:

   a porous polymer substrate; and
   a porous coating layer on at least one surface of the porous polymer substrate,
   wherein the porous coating layer includes a first region at two ends on outermost sides of the separator in a width direction and a second region between the first regions, and
   wherein each of the first region and the second region independently includes inorganic particles and a binder material, and a content ratio of the inorganic particles in the first region according to the following Equation 1 is higher than a content ratio of the inorganic particles in the second region according to the following Equation 2:

   content ratio of the inorganic particles in the first region (wt%) = [an amount of the inorganic particles in the first region/(an amount of the inorganic particles in the first region + an amount of the binder material in the first region)] × 100,     [Equation 1]

   content ratio of the inorganic particles in the second region (wt%) = [an amount of the inorganic particles in the second region/(an amount of the inorganic particles in the second region + an amount of the binder material in the second region)] × 100.     [Equation 2]

2. The separator for the electrochemical device according to claim 1, wherein the porous coating layer has a higher porosity of the first region than a porosity of the second region.

3. The separator for the electrochemical device according to claim 1, wherein the content ratio of the inorganic particles in the second region is lower than the first region and the content ratio of the inorganic particles in the second region is 96 wt% or less.

4. The separator for the electrochemical device according to claim 1, wherein the content ratio of the inorganic particles in the first region is higher than the second region and the content ratio of the inorganic particles in the first region is 70 wt% or more and 98 wt% or less.

5. The separator for the electrochemical device according to claim 1, wherein a width of one first region is from 5% to 35% of a total length of the porous coating layer in the width direction.

6. A method for manufacturing the separator defined in any one of claims 1 to 5, wherein the method is performed by a roll-to-roll process in which a long strip-shaped porous polymer substrate is continuously supplied, and
   wherein the method comprises:
   obtaining a separator strip including a composite porous coating layer having a first region and a second region on at least one surface of the porous polymer substrate, wherein the first region having a predetermined width is present at two ends in a transverse direction perpendicular to a machine direction along which the porous polymer substrate travels and a second region is present between the first regions.

7. The method for manufacturing the separator according to claim 6, wherein the first region and the second region are formed by applying a slurry for forming the first region and a slurry for forming the second region to each preset area using a double slot die, respectively.

8. The method for manufacturing the separator according to claim 6, wherein the separator strip is cut into a predetermined length to obtain the separator, and
   wherein the obtained separator has the second region whose side is exposed through the two ends of the porous polymer substrate in the machine direction.

9. A jellyroll-type electrode assembly comprising:

a first electrode plate having a sheet shape and a second electrode plate having a sheet shape wound in a direction with a separator interposed between the first electrode plate and the second electrode plate, wherein the separator is defined in any one of claims 1 to 5.

10. A cylindrical battery cell comprising:

a jellyroll-type electrode assembly including a positive electrode plate and a negative electrode plate wound in a direction with a separator interposed between the positive electrode plate and the negative electrode plate; a battery can accommodating the electrode assembly; and a sealing body to seal an open end portion of the battery can,
wherein the separator is defined in any one of claims 1 to 5.

11. The cylindrical battery cell according to claim 10, wherein the cylindrical battery cell has a ratio of form factor of 0.4 or more.

12. The cylindrical battery cell according to claim 10, wherein the cylindrical battery cell is a 46110 cell, a 48750 cell, a 48110 cell, a 48800 cell, a 46800 cell or a 46950 cell.

FIG. 1

FIG. 2

FIG. 3

(a)

(b)

(c)

FIG. 4

FIG. 5

FIG. 6

## INTERNATIONAL SEARCH REPORT

| International application No. |
|---|
| **PCT/KR2024/002532** |

**A.    CLASSIFICATION OF SUBJECT MATTER**

**H01M 50/446**(2021.01)i; **H01M 50/449**(2021.01)i; **H01M 50/411**(2021.01)i; **H01M 50/431**(2021.01)i;
**H01M 10/052**(2010.01)i; **H01M 10/04**(2006.01)i; **H01M 50/103**(2021.01)i; **H01M 10/0525**(2010.01)i

According to International Patent Classification (IPC) or to both national classification and IPC

**B.    FIELDS SEARCHED**

Minimum documentation searched (classification system followed by classification symbols)

H01M 50/446(2021.01); B32B 27/32(2006.01); H01M 10/04(2006.01); H01M 10/052(2010.01); H01M 2/14(2006.01); H01M 2/16(2006.01); H01M 4/66(2006.01); H01M 50/403(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 고분자 기재(polymer substrate), 다공성 코팅층(porous coating layer), 무기물 입자(inorganic particle), 바인더(binder)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2014-0135956 A (SONY CORPORATION) 27 November 2014 (2014-11-27)<br>See paragraphs [0025], [0027]-[0028], [0034], [0053], [0063], [0066] and [0080]-[0081]; and figures 1 and 3-4. | 1-12 |
| A | KR 10-2017-0094713 A (LG CHEM, LTD.) 21 August 2017 (2017-08-21)<br>See entire document. | 1-12 |
| A | US 2021-0135237 A1 (ENPOWER, INC.) 06 May 2021 (2021-05-06)<br>See entire document. | 1-12 |
| A | KR 10-2017-0057761 A (LG CHEM, LTD.) 25 May 2017 (2017-05-25)<br>See entire document. | 1-12 |
| A | KR 10-2015-0025825 A (CHEIL INDUSTRIES INC.) 11 March 2015 (2015-03-11)<br>See entire document. | 1-12 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 June 2024** | **17 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/002532** |

| C. | DOCUMENTS CONSIDERED TO BE RELEVANT | |
| --- | --- | --- |
| Category* | Citation of document, with indication, where appropriate, of the relevant passages | Relevant to claim No. |
| PX | WO 2023-167477 A1 (LG ENERGY SOLUTION, LTD.) 07 September 2023 (2023-09-07)<br>See claims 1-13; and figures 1-2. | 1-4,6-8 |

Form PCT/ISA/210 (second sheet) (July 2022)

## INTERNATIONAL SEARCH REPORT
### Information on patent family members

International application No.

**PCT/KR2024/002532**

| Patent document cited in search report | | | Publication date (day/month/year) | Patent family member(s) | | | Publication date (day/month/year) |
|---|---|---|---|---|---|---|---|
| KR | 10-2014-0135956 | A | 27 November 2014 | CN | 104160528 | A | 19 November 2014 |
| | | | | CN | 104160528 | B | 09 June 2017 |
| | | | | JP | 5935872 | B2 | 15 June 2016 |
| | | | | KR | 10-1955061 | B1 | 06 March 2019 |
| | | | | US | 10243189 | B2 | 26 March 2019 |
| | | | | US | 2015-0171396 | A1 | 18 June 2015 |
| | | | | US | 2017-0069895 | A1 | 09 March 2017 |
| | | | | US | 9496534 | B2 | 15 November 2016 |
| | | | | WO | 2013-133025 | A1 | 12 September 2013 |
| KR | 10-2017-0094713 | A | 21 August 2017 | KR | 10-2082654 | B1 | 28 February 2020 |
| US | 2021-0135237 | A1 | 06 May 2021 | CN | 112751142 | A | 04 May 2021 |
| | | | | CN | 112751142 | B | 23 May 2023 |
| | | | | US | 10998553 | B1 | 04 May 2021 |
| | | | | US | 2021-0135236 | A1 | 06 May 2021 |
| KR | 10-2017-0057761 | A | 25 May 2017 | KR | 10-2109830 | B1 | 12 May 2020 |
| KR | 10-2015-0025825 | A | 11 March 2015 | KR | 10-1636857 | B1 | 20 July 2016 |
| WO | 2023-167477 | A1 | 07 September 2023 | CN | 117321846 | A | 29 December 2023 |
| | | | | EP | 4333189 | A1 | 06 March 2024 |
| | | | | KR | 10-2023-0129926 | A | 11 September 2023 |

Form PCT/ISA/210 (patent family annex) (July 2022)

**EP 4 579 923 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20230026319

- KR 20230125131